# EUROPEAN PATENT APPLICATION

(11) **EP 4 741 225 A1**
(43) Date of publication of application: **13.05.2026**
(21) Application number: 25213336.8
(22) Date of filing: 04.11.2025
(51) Int. Cl.: B60N 2/02, B60N 2/14, B60N 2/90

(54) **POWER SWIVEL DEVICE HAVING MANUAL OPERATION DEVICE FOR VEHICLE SEAT**

(30) Priority: 08.11.2024 KR 20240158247; 17.10.2025 KR 20250150324
(71) Applicant: Hyundai Transys Inc., Chungcheongnam-do 31930 (KR)
(72) Inventor: KIM, Won, 18463 Hwaseong-si, Gyeonggi-do (KR); LIM, Heoung Su, 18463 Hwaseong-si, Gyeonggi-do (KR); PARK, Heejun, 18463 Hwaseong-si, Gyeonggi-do (KR)
(74) Representative: Viering, Jentschura & Partner mbB Patent- und Rechtsanwälte

(57) **Abstract**

A power swivel device includes a manual operation device for a vehicle seat configured to release a clutch drum and a brake drum of the power swivel device from a restrained state or to allow a vehicle seat, which is connected to a rotary plate, to be manually rotated by releasing the brake drum and the rotary plate from a restrained state in a state in which a motor is stopped.

## Description

### CROSS-REFERENCE TO RELATED APPLICATIONS

This application claims priority to and the benefit of Korean Patent Application No. 10-2024-0158247 and 10-2025-0150324 filed in the Korean Intellectual Property Office on November 08, 2024, and October 17, 2025, respectively, the entire contents of which are incorporated herein by reference.

### TECHNICAL FIELD

The present disclosure relates to a power swivel device provided with a manual operation device for a vehicle seat.

### BACKGROUND

In general, vehicle seats may be equipped with various types of convenience devices to provide passengers with comfortable ride quality and convenience.

Examples of the convenience devices of the vehicle seats may include a seat track device configured to move a vehicle seat forward or rearward to suit an occupant's body type, a leg rest configured to support a passenger's leg, and a power swivel device configured to rotate the vehicle seat.

The seat track device may include a lower rail coupled to a floor panel in a vehicle interior, and an upper rail inserted into the lower rail and configured to move along the lower rail. The power swivel device may be connected to the upper rail.

In the power swivel device, power of a motor, such as a brushless direct current motor (BLDC), may be transmitted to a rotary plate through a ring gear that engages with a pinion gear of the motor. Because the rotary plate is connected to a swivel seat, the swivel seat may be rotated by a rotation of the rotary plate. When the swivel seat is rotated by an operation of the power swivel device, a passenger seated in the swivel seat may face another passenger seated in another seat, thereby expanding spatial utilization of a vehicle interior.

However, because the power swivel device in the related art is not provided with a separate manual operation device for a vehicle seat, the power swivel device in the related art is not capable of forcibly and manually rotating the vehicle seat in case that the motor for operating the power swivel device is stopped due to an accident or the like.

### [Document of Related Art]

### [Patent Document]

(Patent Document 1) Korean Patent Application Laid-Open No. 10-2020-0078903 (published on July 2, 2020)

### SUMMARY

The present disclosure has been made in an effort to solve the above-mentioned problem, and an object of the present disclosure is to provide a power swivel device provided with a manual operation device for a vehicle seat, the manual operation device being capable of manually rotating a vehicle seat in a state in which a motor for operating the power swivel device is stopped due to an accident or the like.

In order to achieve the above-mentioned object, the present disclosure provides a power swivel device for a vehicle seat, the power swivel device including: a manual operation device configured to allow manual rotation of a vehicle seat connected to a rotary plate by releasing a clutch drum and a brake drum of the power swivel device from a first restrained state or by releasing the brake drum and the rotary plate from a second restrained state when a motor of the power swivel device is stopped.

The manual operation device according to the first embodiment of the present disclosure may include: a locking pin having a lower portion configured to penetrate the rotary plate and to be inserted into a locking groove positioned on the brake drum; a support frame spaced apart from the rotary plate at an interval and positioned above the rotary plate, the support frame having an upper surface having an insertion hole into which an upper portion of the locking pin is inserted, the support frame having a seating portion extending from an outer-diameter portion of the support frame, the seating portion being connected to the rotary plate, the support frame being elastically supported by a first spring coupled to the locking pin; and a support member positioned between the support frame and the rotary plate and having a support portion extending from an outer-diameter portion of the support member, the support portion being configured to support the locking pin.

In addition, a catching projection may be positioned on an outer-diameter portion of the locking pin, and the first spring may be positioned between the catching projection and the support frame in a state in which the first spring is caught by the catching projection, a first protruding portion positioned on an inner-diameter portion of the support frame and a second protruding portion positioned on the outer-diameter portion of the support member may be connected by a hinge shaft, and the support portion may support the catching projection while surrounding the outer-diameter portion of the locking pin.

In addition, when a wire connected to the support member is pulled in an unlocking direction, the second protruding portion may be configured to rotate downward about the hinge shaft, the support portion may be configured to push the catching projection upward, a lower portion of the locking pin may be configured to depart from the locking groove of the brake drum and a penetrated portion of the rotary plate when the support portion pushes the catching projection upward, and the brake drum and the rotary plate may be configured to be released from the second restrained state, such that the vehicle seat connected to the rotary plate may be rotatable manually.

An inner-diameter portion of the brake drum may have a first locking groove positioned thereon, and an inner-diameter portion of the rotary plate may have a second locking groove positioned thereon. The manual operation device according to the second embodiment of the present disclosure may include: a locking pin configured to be simultaneously inserted into the first locking groove positioned on the inner-diameter portion of the brake drum and the second locking groove positioned on the inner-diameter portion of the rotary plate; and a spring having one end connected to the locking pin and another end connected to the rotary plate.

The manual operation device further may include a pulling member configured to be disposed in the first locking groove and the second locking groove. In addition, when a wire connected to the pulling member is pulled in an unlocking direction, the locking pin inserted into the first and second locking grooves may be configured to be pushed in the unlocking direction by the pulling member, the locking pin and the pulling member may be configured to depart from the first locking groove and the second locking groove, and the brake drum and the rotary plate may be configured to be released from the second restrained state, such that the vehicle seat connected to the rotary plate may be rotatable manually.

An inner-diameter portion of the brake drum may a first locking groove positioned thereon, and an inner-diameter portion of the rotary plate may have a second locking groove positioned thereon. The manual operation device according to the third embodiment of the present disclosure may include: a locking pin configured to be simultaneously inserted into the first locking groove positioned on the inner-diameter portion of the brake drum and the second locking groove positioned on the inner-diameter portion of the rotary plate; and an unlocking member positioned above the rotary plate, having an inner-diameter portion having a third locking groove configured to be inserted with the locking pin, and having an outer-diameter portion from which a lever extends.

In addition, when the lever is rotated in an unlocking direction, the locking pin inserted into the third locking groove may be configured to be pushed in a first direction by the inner-diameter portion of the unlocking member by the rotation of the unlocking member, the locking pin may be configured to depart from the first locking groove, the second locking groove, and the third locking groove, and the brake drum and the rotary plate may be configured to be released from the second restrained state, such that the vehicle seat connected to the rotary plate may be rotatable manually.

The manual operation device for a vehicle seat according to the fourth embodiment of the present disclosure may include: a lift member positioned below a housing and having a pressing pin configured to push a pressing protrusion upward in an unlocking direction to separate the pressing protrusion from the clutch gear, the pressing protrusion being coupled to the clutch gear accommodated in the housing; and an actuator configured to push the lift member upward.

In addition, when the lift member is pushed upward in the unlocking direction by the actuator, the pressing pin may be configured to penetrate a first through-hole of the housing and a second through-hole of the clutch gear and push an insertion protrusion upward in the unlocking direction, the insertion protrusion being positioned on a lower portion of the pressing protrusion and configured to be inserted into the second through-hole, the pressing protrusion may be configured to be separated from the clutch gear, and the clutch gear and the brake drum may be configured to be released from the first restrained state. The rotary plate may be connected to the brake drum, and when the clutch gear and the brake drum are released form the first restrained state, the brake drum and the rotary plate may be configured to be integrally rotated when a rotary lever positioned on a rotary member connected to the brake drum rotates, such that the vehicle seat connected to the rotary plate may be rotatable manually.

The power swivel device according to the fifth embodiment of the present disclosure may include: a housing having an inner-diameter portion having at least one cut-out portion; and a brake module inserted into the housing and including the brake drum, in which the clutch gear has gear teeth positioned along an inner-diameter portion thereof, at least one portion of the gear teeth being exposed through the at least one cut-out portion, the gear teeth being configured to engage with a pinion gear of the motor in a state in which the clutch gear is inserted into the housing, in which at least one stopper is positioned on the brake drum, and in which the at least one stopper is configured to restrict an additional rotation of the brake drum in a hard stop state in which an operation of the brake drum is stopped.

In addition, the housing may include: a first accommodation portion positioned in the housing adjacent to the inner-diameter portion of the housing and having the clutch gear inserted therein; and a second accommodation portion configured to communicate with the first accommodation portion and positioned in the housing adjacent to an outer edge of the housing while defining a stepped portion together with the first accommodation portion, the second accommodation portion having a height higher than a height of the first accommodation portion, the brake module may further include a brake ring inserted into the second accommodation portion, and the brake drum may be seated on the clutch gear and positioned at a height same as a height of the brake ring.

In addition, the at least one stopper may be positioned on an inner-diameter portion of the brake drum to correspond to a position of the pinion gear, and the at least one stopper may be configured to surround at least a part of a circumference of the pinion gear.

In addition, the clutch gear may have a double injection molding structure including a gear part, and a main body part configured to surround an edge portion of the gear part.

In addition, the power swivel device further may include a position switch configured to prevent an erroneous operation of the clutch gear, wherein the position switch may be configured to determine that a position of the clutch gear is an abnormal position when the clutch gear is stopped when the position switch is in a turn-on state, and or determine that the position of the clutch gear is a normal position when the clutch gear is stopped while the position switch is turned off.

In addition, a brake member may be positioned between an inner-diameter portion of the brake ring and an outer-diameter portion of the brake drum, the brake member may be configured to be in a brake state when the brake member is positioned between pressing protrusions disposed along an edge of one surface of the clutch gear, and the brake member may be configured to switch from the brake state to a brake release state by being pushed by the pressing protrusions when the clutch gear rotates.

In addition, the brake member may include: an elastic member; and rollers positioned at two opposite sides of the elastic member to be directed toward the pressing protrusions, the rollers being elastically supported by the elastic member, the brake drum may have support surfaces positioned on the outer-diameter portion thereof, each of the rollers may be configured to be wedged between an inner-diameter portion of the brake drum and each of the support surfaces to implement the brake state, and each of the rollers may be configured to be released from being wedged to implement the brake release state when each of the rollers is pushed by each of the pressing protrusions and positioned in a support groove positioned at one end of each of the support surfaces.

In addition, a cover may be coupled to an upper surface of the housing above the clutch gear, the brake ring, and the brake drum, and the cover may be seated on an upper surface of the brake ring, pressing protrusions of the clutch gear, and a seating surface positioned at an edge of the brake drum.

In addition, a clip may be positioned along an outer-diameter portion of the cover, and a coupling hole defined in the clip may be coupled to a coupling protrusion disposed on an outer-diameter portion of the housing.

In addition, the housing may be seated and coupled onto a fixing frame, a rim cover may be coupled to an edge of the fixing frame, a swivel member may be inserted into an inner-diameter portion of the rim cover, an edge portion of the swivel member may be inserted into the rim cover, first and second rail parts may be respectively positioned above and below the edge portion of the swivel member, the first rail part may be rotatably supported by a first ball disposed under the rim cover and above the edge portion of the swivel member, the second rail part may be rotatably supported by a second ball positioned on the fixing frame and under the edge portion of the swivel member, and the swivel member may be connected to the rotary plate.

According to the present disclosure, a passenger seated in the vehicle may be quickly rescued by allowing the vehicle seat to be manually rotated even though the motor for operating the power swivel device is stopped due to a traffic accident or the like.

In addition, according to the present disclosure, the vehicle seat may be manually rotated by the operation of the manual operation device for a vehicle seat without removing the vehicle seat when the motor is stopped.

In addition, according to the present disclosure, it is possible to optimize the operation sensitivity during the swivel operation and compensate for the clearance in the rotation direction in the stopped state, thereby improving the stability of the vehicle seat.

In addition, according to the present disclosure, it is possible to enhance the manipulation sensitivity, thereby providing comfort to the passenger while simultaneously improving marketability.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a manual operation device for a vehicle seat according to a first embodiment of the present disclosure.
FIG. 2 is an enlarged view of part A in FIG. 1.
FIG. 3 is a view illustrating an operation of a support member according to the first embodiment of the present disclosure.
FIG. 4 is a view illustrating a manual operation device for a vehicle seat according to a second embodiment of the present disclosure.
FIG. 5 is an enlarged view of part B in FIG. 4.
FIG. 6 is a view illustrating a state in which a locking pin according to the second embodiment of the present disclosure is inserted into a first locking groove and a second locking groove.
FIG. 7 is a view illustrating a pulling member and a wire that operate in conjunction with the locking pin according to the second embodiment of the present disclosure.
FIG. 8 is a view illustrating a manual operation device for a vehicle seat according to a third embodiment of the present disclosure.
FIG. 9 is a view illustrating an operation of a lever of an unlocking member according to the third embodiment of the present disclosure.
FIG. 10 is a view illustrating an unlocking process of a locking pin according to the third embodiment of the present disclosure.
FIG. 11 is a view illustrating a manual operation device for a vehicle seat according to a fourth embodiment of the present disclosure.
FIG. 12 is a view illustrating a clutch gear according to the fourth embodiment of the present disclosure.
FIG. 13 is a side view illustrating a lift member and a rotary member according to the fourth embodiment of the present disclosure.
FIG. 14 is an enlarged view of the rotary member according to the fourth embodiment of the present disclosure.
FIG. 15 is a view illustrating a state made before the lift member according to the fourth embodiment of the present disclosure operates.
FIG. 16 is a view illustrating an operating state of the lift member according to the fourth embodiment of the present disclosure.
FIG. 17 is a view illustrating a rotational operation of a rotary lever according to the fourth embodiment of the present disclosure.
FIG. 18 is a perspective view illustrating a configuration of a power swivel device that excludes a manual operation device for a vehicle seat according to a fifth embodiment of the present disclosure.
FIG. 19 is a perspective view illustrating a state in which a clutch gear, a brake ring, a brake drum, and a cover are assembled to a housing according to the fifth embodiment of the present disclosure.
FIG. 20 is an exploded perspective view of the power swivel device that excludes the manual operation device for a vehicle seat according to the fifth embodiment of the present disclosure.
FIG. 21 is a top plan view illustrating an operation of a brake member according to the fifth embodiment of the present disclosure.
FIG. 22 is a bottom plan view illustrating a state in which gear teeth of the clutch gear are exposed through a cut-out portion of the housing according to the fifth embodiment of the present disclosure.
FIG. 23 is a cross-sectional view taken along line A-A in FIG. 21.
FIGS. 24A to 24D are views illustrating the clutch gear manufactured as a double injection molding structure according to the fifth embodiment of the present disclosure.
FIG. 25 is a view illustrating a position switch according to the fifth embodiment of the present disclosure.
FIG. 26 is a perspective view illustrating a state in which a rim cover and a swivel member are assembled to a fixing frame according to the fifth embodiment of the present disclosure.
FIG. 27 is a cross-sectional view taken along line B-B in FIG. 26.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

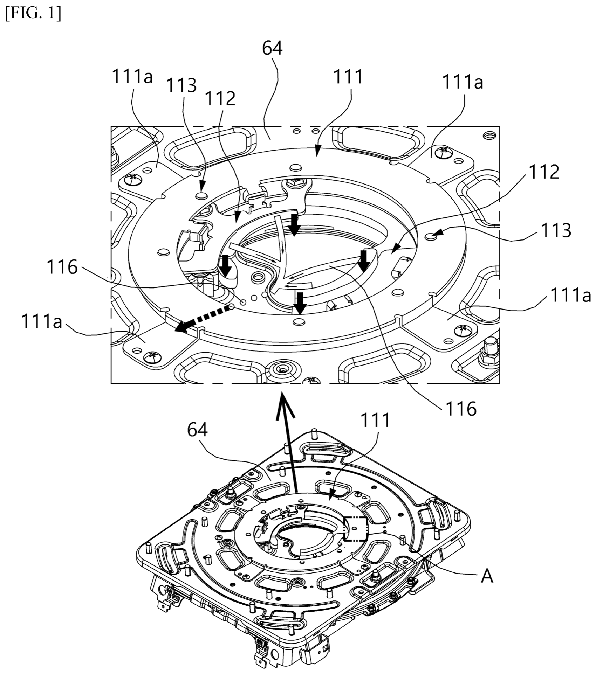

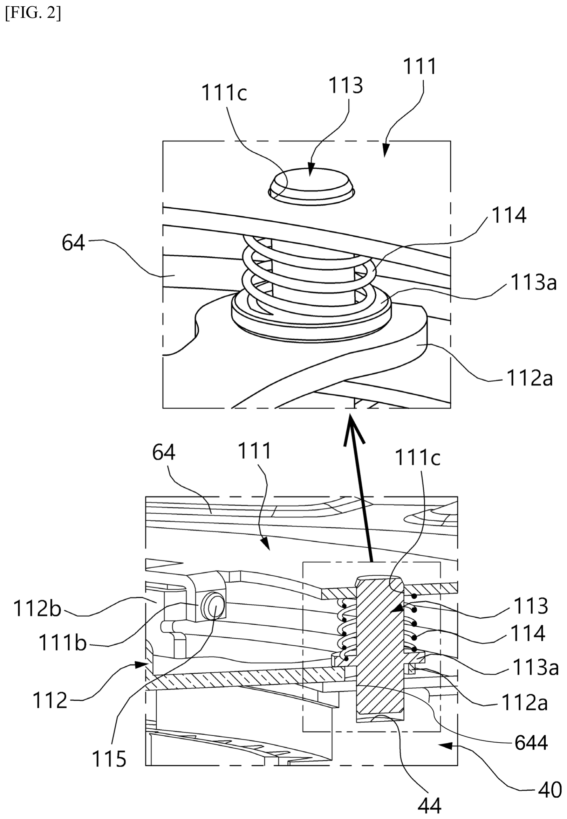

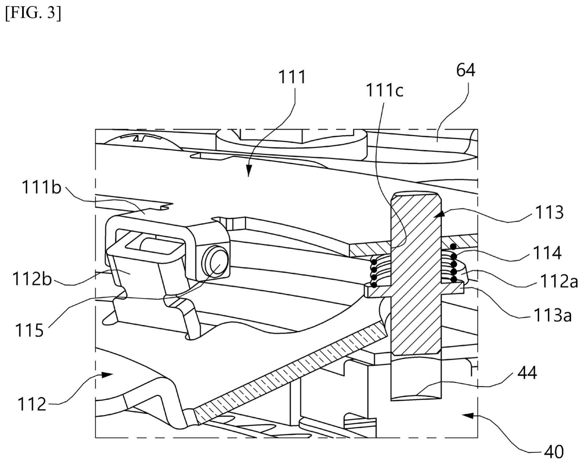

FIG. 1 is a view illustrating a manual operation device for a vehicle seat according to a first embodiment of the present disclosure. FIG. 2 is an enlarged view of part A in FIG. 1. FIG. 3 is a view illustrating an operation of a support member according to the first embodiment of the present disclosure.

As illustrated in FIGS. 1 to 3, the manual operation device for a vehicle seat according to the first embodiment of the present disclosure may include locking pins 113, a support frame 111, and support members 112.

Lower portions of the locking pins 113 may penetrate a rotary plate 64 and be inserted into locking grooves 44 provided in a brake drum 40.

The support frame 111 may be configured as a ring shape. The support frame 111 may be positioned above the rotary plate 64 and spaced apart from the rotary plate 64 at an interval. The support frame 111 may include insertion holes 111c, first protruding portions 111b, and seating portions 111a.

The insertion holes 111c may be provided as a plurality of insertion holes 111c provided along an upper surface of the support frame 111. Upper portions of the locking pins 113 may be inserted into the insertion holes 111c. The first protruding portions 111b may be provided on an inner-diameter portion of the support frame 111.

The seating portions 111a may extend from an outer-diameter portion of the support frame 111. The support frame 111 may be connected to the rotary plate 64 by the seating portions 111a. The support frame 111 may be elastically supported by first springs 114 coupled to the locking pins 113.

The support member 112 may be positioned between the support frame 111 and the rotary plate 64. The support member 112 may include support portions 112a and second protruding portions 112b. The support portions 112a may extend from an outer-diameter portion of the support member 112.

The support portion 112a may support a catching projection 113a while surrounding an outer-diameter portion of the locking pin 113.

The second protruding portions 112b may be provided on the outer-diameter portion of the support member 112. The second protruding portion 112b may be connected to the first protruding portion 111b of the support frame 111 by a hinge shaft 115 and configured to be rotatable downward.

The catching projection 113a may be provided on the outer-diameter portion of the locking pin 113. The first spring 114 may be positioned between the support frame 111 and the catching projection 113a. The first spring 114 may be coupled to the locking pin 113. A lower portion of the first spring 114 may be caught by the catching projection 113a of the locking pin 113.

For example, the first spring 114 may be a coil spring.

When a wire 116 connected to the support member 112 is pulled in an unlocking direction, the second protruding portion 112b may rotate downward about the hinge shaft 115.

When the second protruding portion 112b rotates downward about the hinge shaft 115, the support portion 112a may push the catching projection 113a of the locking pin 113 upward.

The first spring 114 between the support frame 111 and the catching projection 113a may be compressed during the process in which the support portion 112a pushes the catching projection 113a of the locking pin 113 upward.

When the support portion 112a pushes the catching projection 113a of the locking pin 113 upward, the locking pin 113 may move upward in the unlocking direction.

When the locking pin 113 moves upward in the unlocking direction, the lower portion of the locking pin 113 may depart from the locking groove 44 of the brake drum 40 and the penetrated portion 644 of the rotary plate 64.

When the locking pin 113 departs from the locking groove 44 of the brake drum 40 and the penetrated portion 644 of the rotary plate 64, the brake drum 40 and the rotary plate 64 may be released from a restrained state.

When the rotary plate 64 is released from the restrained state, a state in which a vehicle seat (not illustrated) connected to the rotary plate 64 may be manually rotated may be achieved.

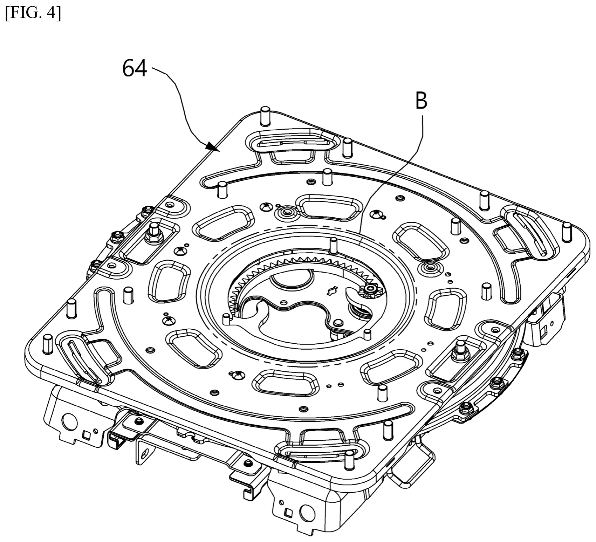

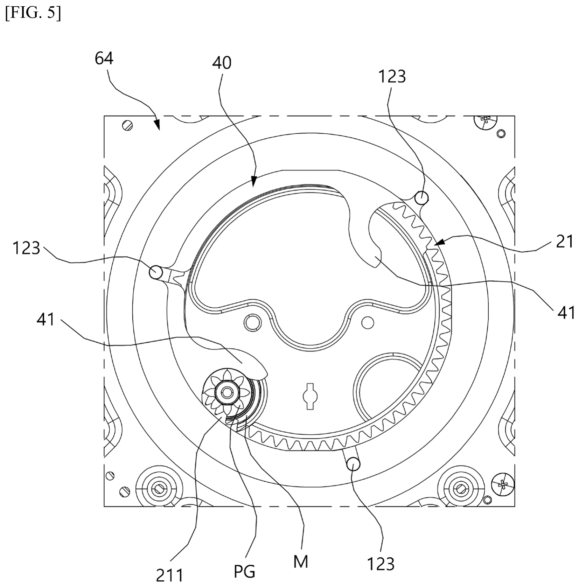

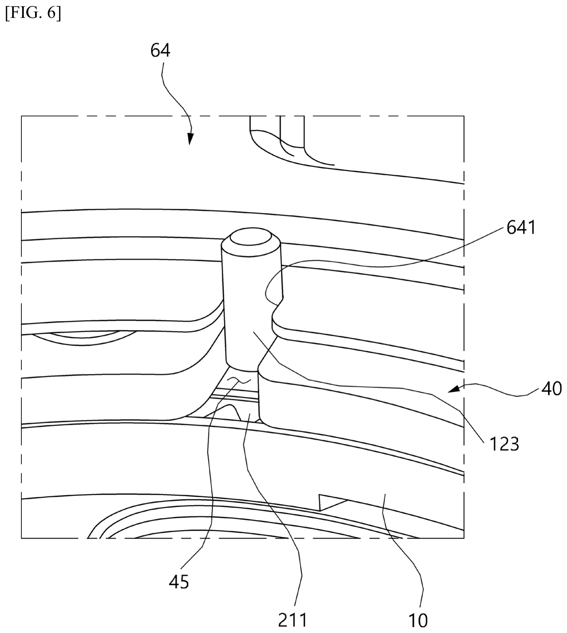

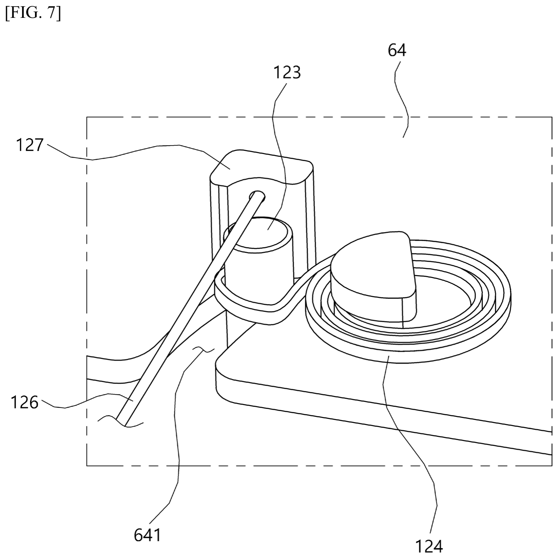

FIG. 4 is a view illustrating a manual operation device for a vehicle seat according to a second embodiment of the present disclosure. FIG. 5 is an enlarged view of part B in FIG. 4. FIG. 6 is a view illustrating a state in which a locking pin according to the second embodiment of the present disclosure is inserted into a first locking groove and a second locking groove. FIG. 7 is a view illustrating a pulling member and a wire that operate in conjunction with the locking pin according to the second embodiment of the present disclosure.

As illustrated in FIGS. 4 to 7, the manual operation device for a vehicle seat according to the second embodiment of the present disclosure may include locking pins 123, a pulling member 127, a second spring 124, and a wire 126.

The locking pins 123 may be simultaneously inserted into first locking grooves 45 provided in an inner-diameter portion of the brake drum 40 and second locking grooves 641 provided in an inner-diameter portion of the rotary plate 64. The brake drum 40 and the rotary plate 64 may be restrained when the locking pins 123 are simultaneously inserted into the first locking grooves 45 and the second locking grooves 641.

For example, a portion of the pulling member 127, which is in contact with the locking pin 123, may be configured as a curved surface that conforms to the locking pin 123.

The pulling member 127 may be simultaneously inserted into the first locking groove 45 and the second locking groove 641. The pulling member 127 may be positioned rearward (e.g. closer toward the groove bottoms of the first locking groove 45 and second locking groove 641) of the locking pin 123. The pulling member 127 may press the locking pin 123 in the unlocking direction in the state in which the pulling member 127 is inserted into the first locking groove 45 and the second locking groove 641.

One end of the second spring 124 may be connected to the locking pin 123. The other end of the second spring 124 may be connected to the rotary plate 64. For example, the second spring 124 may be a spiral spring.

The wire 126 may be connected to an upper portion of the pulling member 127. When the wire 126 connected to the pulling member 127 is pulled in the unlocking direction, the locking pin 123 inserted into the first locking groove 45 and the second locking groove 641 may be pushed by the pulling member 127 and moved in the unlocking direction.

The second spring 124 may be stretched during the process in which the locking pin 123 is pushed by the pulling member 127 and moved in the unlocking direction.

The restrained states of the brake drum 40 and the rotary plate 64 may be released when the locking pin 123 is pushed by the pulling member 127 and departs from the first locking groove 45 and the second locking groove 641.

The rotary plate 64 may rotate as the brake drum 40 and the rotary plate 64 are released from the restrained state. Therefore, the state in which the vehicle seat (not illustrated) connected to the rotary plate 64 may be manually rotated may be achieved.

When the vehicle seat (not illustrated) is forcibly rotated to a desired position, the rotary plate 64, which is released from the brake drum 40, may also rotate together with the vehicle seat (not illustrated).

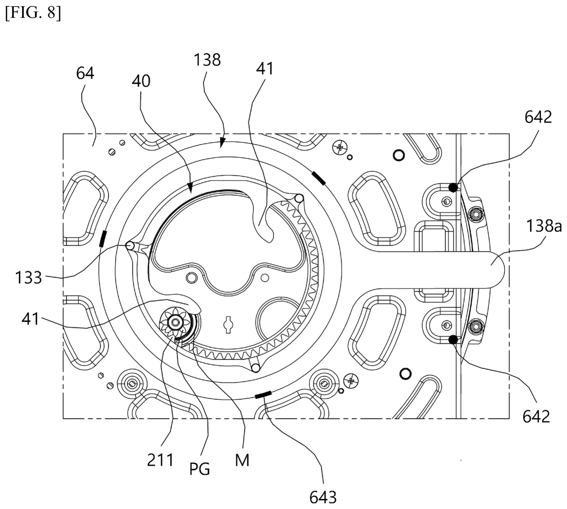

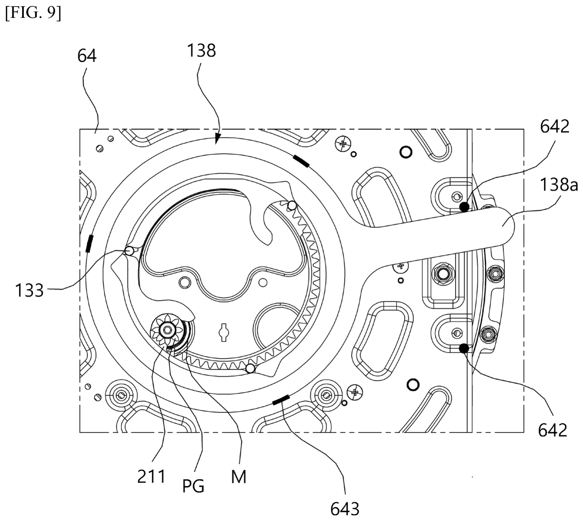

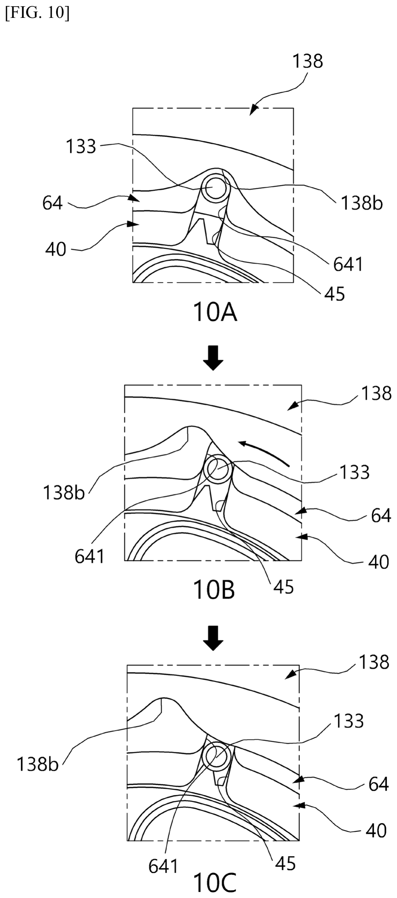

FIG. 8 is a view illustrating a manual operation device for a vehicle seat according to a third embodiment of the present disclosure. FIG. 9 is a view illustrating an operation of a lever of an unlocking member according to the third embodiment of the present disclosure. FIG. 10 is a view illustrating an unlocking process of a locking pin according to the third embodiment of the present disclosure.

As illustrated in FIGS. 8 to 10, the manual operation device for a vehicle seat according to the third embodiment of the present disclosure may include locking pins 133 and an unlocking member 138.

The locking pins 133 may be simultaneously inserted into the first locking grooves 45 provided in the inner-diameter portion of the brake drum 40 and the second locking grooves 641 provided in the inner-diameter portion of the rotary plate 64.

The unlocking member 138 may be positioned above the rotary plate 64. An outer-diameter portion of the unlocking member 138 may be supported by supporting members 643 provided on the rotary plate 64 so that the unlocking member 138 may rotate axially.

The unlocking member 138 may stably rotate axially in the state in which the unlocking member 138 is supported by the supporting members 643.

The unlocking member 138 may include third locking grooves 138b and a lever 138a.

The third locking grooves 138b may be provided as a plurality of third locking grooves 138b provided along an inner-diameter portion of the unlocking member 138. The locking pins 133 may be inserted into the third locking grooves 138b.

The lever 138a may extend from an outer-diameter portion of the unlocking member 138. The lever 138a may be positioned between rotation restriction protrusions 642 provided at two opposite sides of the rotary plate 64.

The lever 138a may rotate within a range between the rotation restriction protrusions 642 provided at the two opposite sides of the rotary plate 64. When the lever 138a is caught by the rotation restriction protrusion 642, an excessive rotation of the lever 138a may be restricted.

When the lever 138a is rotated in the unlocking direction, the locking pin 133 inserted into the third locking groove 138b may be pushed in the unlocking direction by the inner-diameter portion of the unlocking member 138 by the rotation of the unlocking member 138.

When the locking pin 133 is pushed in the unlocking direction by the inner-diameter portion of the unlocking member 138, the locking pin 133 may depart from the first locking groove 45, the second locking groove 641, and the third locking groove 138b.

When the locking pin 133 departs from the first locking groove 45, the second locking groove 641, and the third locking groove 138b, the brake drum 40 and the rotary plate 64 may be released from the restrained state.

When the brake drum 40 and the rotary plate 64 are released from the restrained state, the state in which the vehicle seat (not illustrated) connected to the rotary plate 64 may be manually rotated may be achieved.

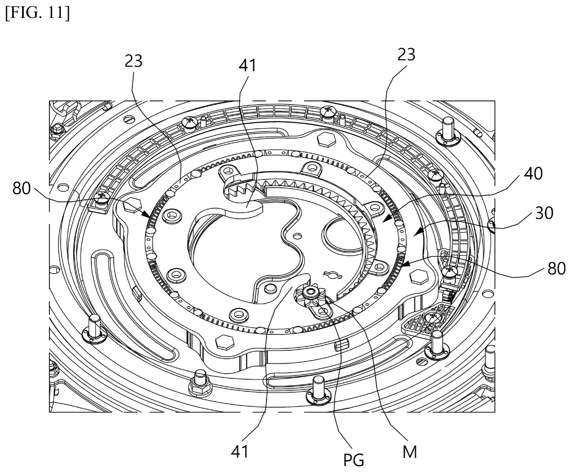

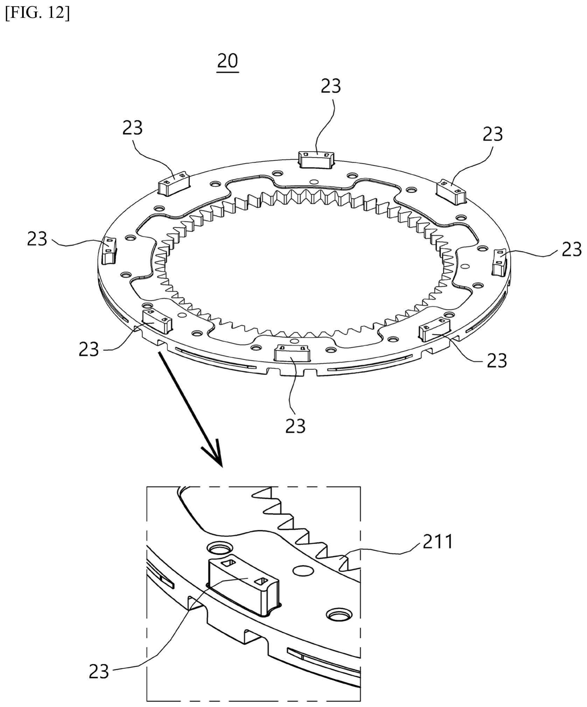

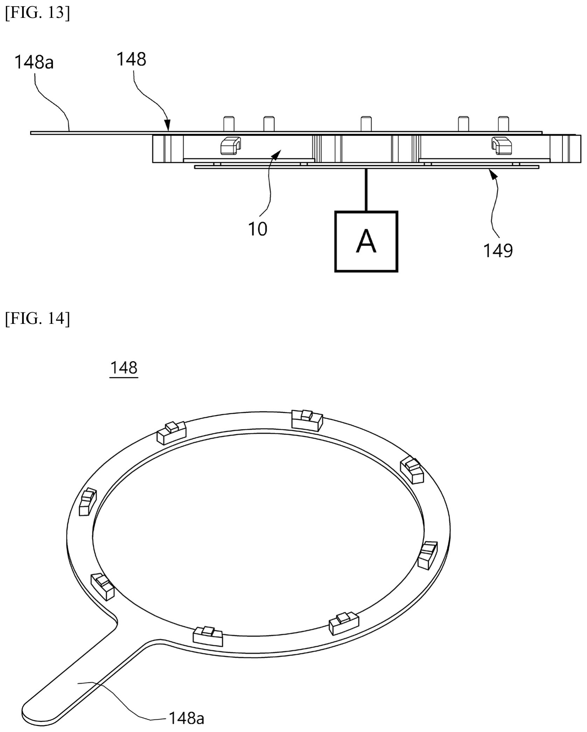

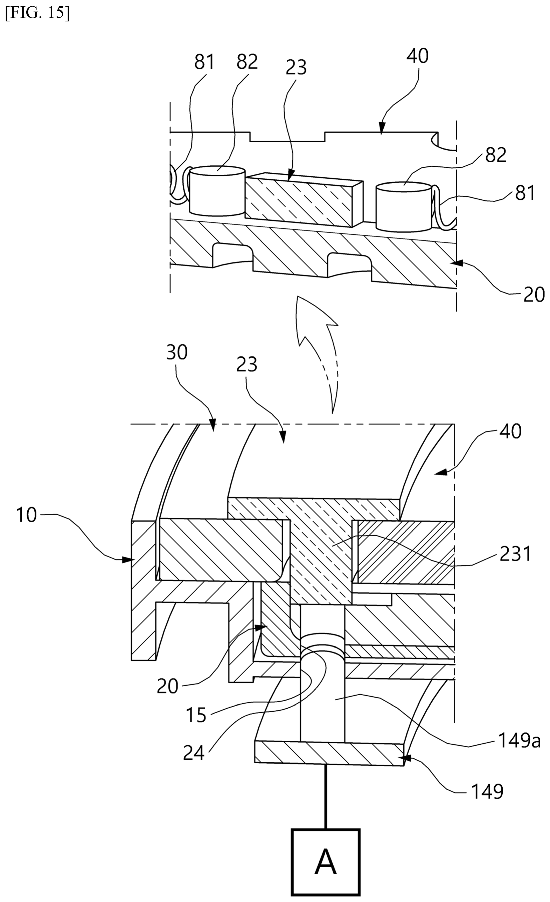

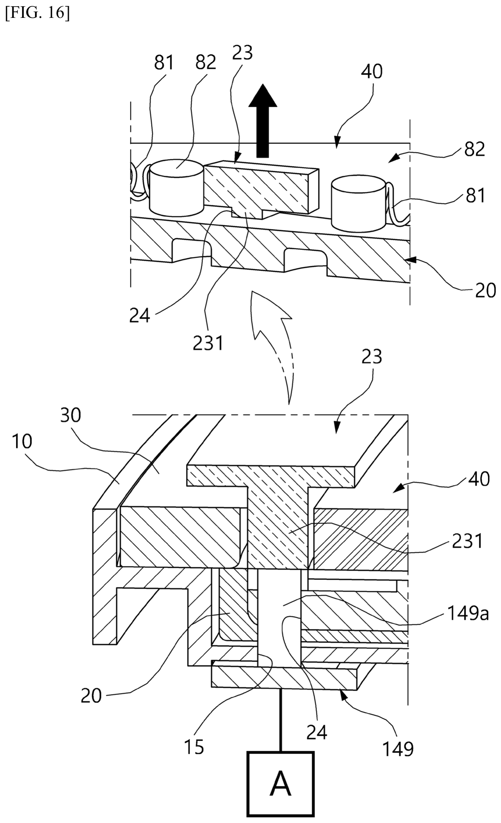

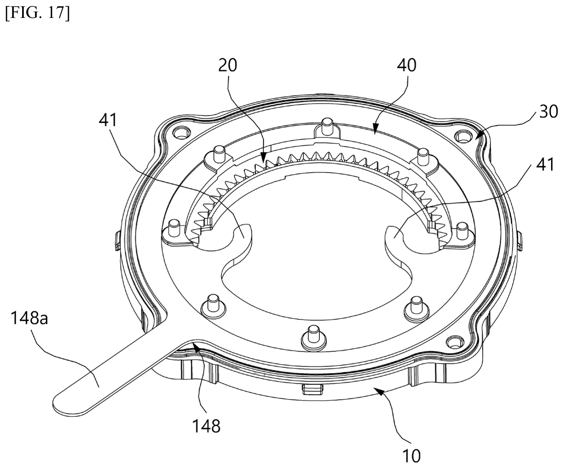

FIG. 11 is a view illustrating a manual operation device for a vehicle seat according to a fourth embodiment of the present disclosure. FIG. 12 is a view illustrating a clutch gear according to the fourth embodiment of the present disclosure. FIG. 13 is a side view illustrating a lift member and a rotary member according to the fourth embodiment of the present disclosure. FIG. 14 is an enlarged view of the rotary member according to the fourth embodiment of the present disclosure. FIG. 15 is a view illustrating a state made before the lift member according to the fourth embodiment of the present disclosure operates. FIG. 16 is a view illustrating an operating state of the lift member according to the fourth embodiment of the present disclosure. FIG. 17 is a view illustrating a rotational operation of a rotary lever according to the fourth embodiment of the present disclosure.

As illustrated in FIGS. 11 to 17, the manual operation device for a vehicle seat according to the fourth embodiment of the present disclosure may include a lift member 149, an actuator A, and a rotary member 148.

The lift member 149 may be positioned below a housing 10. The lift member 149 may be provided with pressing pins 149a. The actuator A may push the lift member 149 upward in the unlocking direction.

The housing 10 may be provided with first through-holes 15. A clutch gear 20 may be accommodated in the housing 10. The clutch gear 20 may be provided with second through-holes 24. The first through-hole 15 and the second through-hole 24 may be consistent with each other. Pressing protrusions 23 may be coupled to the clutch gear 20.

An insertion protrusion 231 may be provided on a lower portion of the pressing protrusion 23. The insertion protrusion 231 may be coupled to the second through-hole 24 of the clutch gear 20.

When the pressing pin 149a of the lift member 149 may penetrate the first through-hole 15 and the second through-hole 24 and push the insertion protrusion 231 upward, the pressing protrusion 23 may be separated from the clutch gear 20.

The rotary member 148 may be connected to the brake drum 40. The rotary member 148 may be positioned between the brake drum 40 and the rotary plate 64.

The rotary plate 64 may be positioned above the rotary member 148 and spaced apart from the rotary member 148 at an interval so that the rotary member 148 may rotate. The rotary plate 64 may be connected to the brake drum 40.

When the lift member 149 is pushed upward in the unlocking direction by the actuator A, the pressing pin 149a may penetrate the first through-hole 15 of the housing 10 and the second through-hole 24 of the clutch gear 20 and push the insertion protrusion 231, which is inserted into the second through-hole 24, upward in the unlocking direction.

When the pressing pin 149a pushes the insertion protrusion 231 to the outside of the second through-hole 24 of the clutch gear 20, the pressing protrusion 23 may be separated from the clutch gear 20.

When the pressing protrusions 23 are separated from the clutch gear 20, the clutch gear 20 and the brake drum 40 may be released from the restrained state.

The brake drum 40 may be rotated when a rotary lever 148a of the rotary member 148 is rotated in the state in which the clutch gear 20 and the brake drum 40 are released from the restrained state.

When the brake drum 40 is rotated, the rotary plate 64 connected to the brake drum 40 may be rotated.

When the rotary plate 64 rotates, the vehicle seat (not illustrated) connected to the rotary plate 64 may be manually rotated.

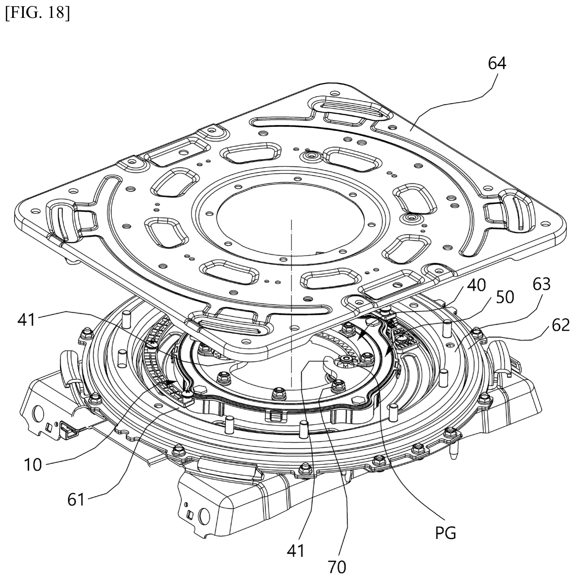

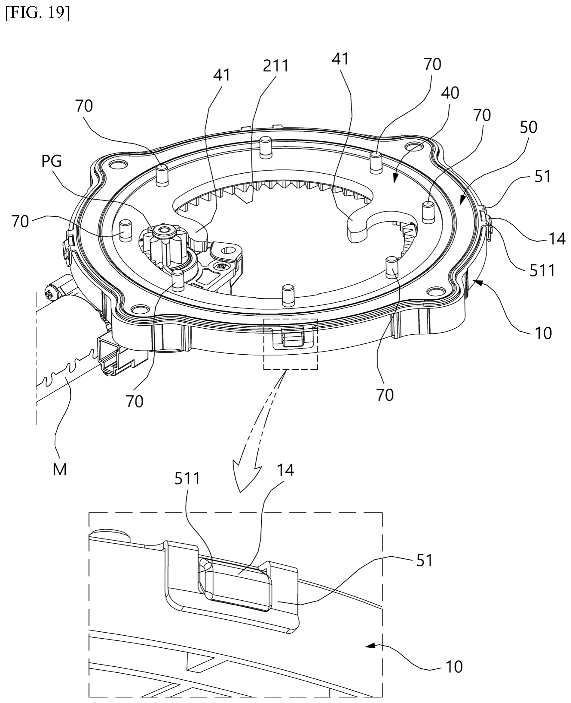

FIG. 18 is a perspective view illustrating a configuration of a power swivel device that excludes a manual operation device for a vehicle seat according to a fifth embodiment of the present disclosure. FIG. 19 is a perspective view illustrating a state in which a clutch gear, a brake ring, a brake drum, and a cover are assembled to a housing according to the fifth embodiment of the present disclosure.

As illustrated in FIGS. 18 and 19, in the power swivel device, which excludes the manual operation device for a vehicle seat according to the fifth embodiment of the present disclosure, power of a motor M may be transmitted to the rotary plate 64 through the clutch gear 20.

When the power of the motor M is transmitted to the rotary plate 64 through the clutch gear 20, the rotary plate 64 may swivel. Therefore, the vehicle seat (not illustrated) connected to the rotary plate 64 may rotate.

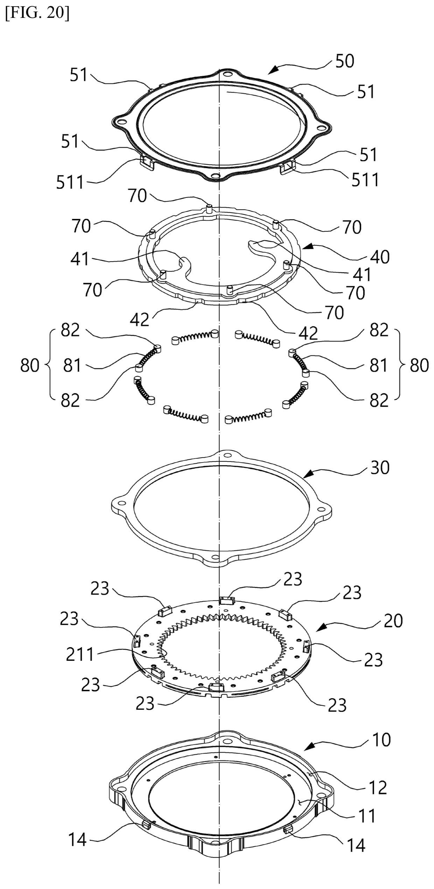

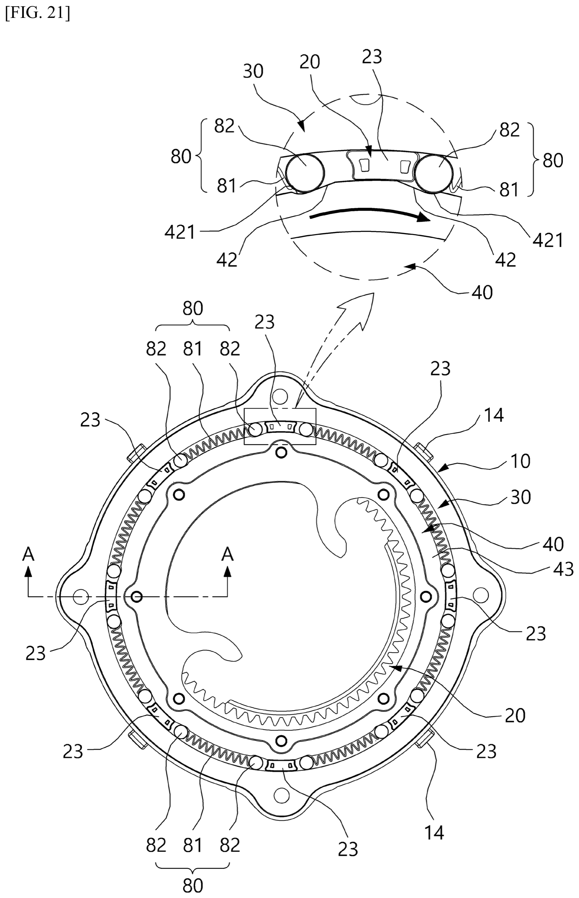

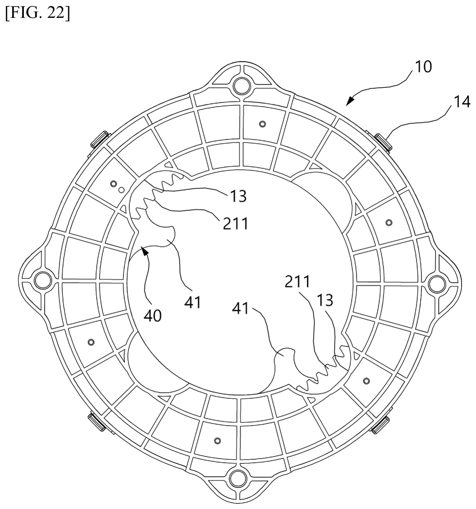

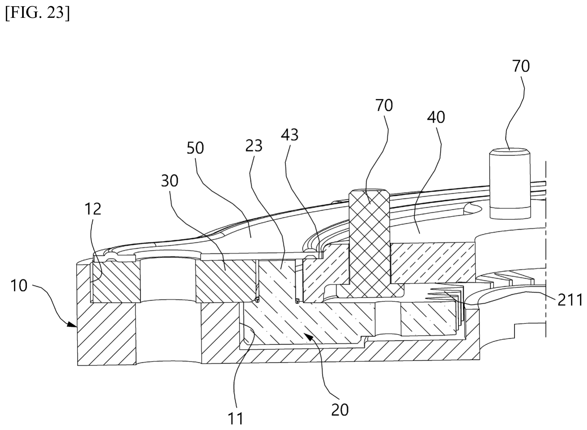

FIG. 20 is an exploded perspective view of the power swivel device that excludes the manual operation device for a vehicle seat according to the fifth embodiment of the present disclosure. FIG. 21 is a top plan view illustrating an operation of a brake member according to the fifth embodiment of the present disclosure. FIG. 22 is a bottom plan view illustrating a state in which gear teeth of the clutch gear are exposed through a cut-out portion of the housing according to the fifth embodiment of the present disclosure. FIG. 23 is a cross-sectional view taken along line A-A in FIG. 21.

As illustrated in FIGS. 20 to 23, a cover 50 may be coupled to an upper portion of the housing 10 in a state in which the clutch gear 20, a brake ring 30, and the brake drum 40 are assembled in the housing 10.

The housing 10 may include a first accommodation portion 11, a second accommodation portion 12, cut-out portions 13, and coupling protrusions 14.

The first accommodation portion 11 may be formed in the housing 10 and formed adjacent to an inner-diameter portion of the housing 10. The first accommodation portion 11 may be configured in a shape that conforms to the clutch gear 20 so that the clutch gear 20 may be inserted into the first accommodation portion 11.

The second accommodation portion 12 may be formed in the housing 10 and formed adjacent to an edge of the housing 10. The second accommodation portion 12 may communicate with the first accommodation portion 11. The second accommodation portion 12 may be formed to be higher than the first accommodation portion 11 in order to form a stepped portion together with the first accommodation portion 11. The second accommodation portion 12 may be configured in a shape that conforms to the brake ring 30 so that the brake ring 30 may be inserted into the second accommodation portion 12.

The brake drum 40 may be assembled by being seated on the clutch gear 20 in the state in which the clutch gear 20 is inserted and assembled into the first accommodation portion 11 of the housing 10.

Because the second accommodation portion 12 is higher in height than the first accommodation portion 11, the brake ring 30, which is inserted into the second accommodation portion 12, and the brake drum 40, which is seated on the clutch gear 20, may be equal in height.

The pressing protrusions 23 may be provided at equal intervals along an edge of an upper surface of the clutch gear 20. The brake drum 40 may be inserted into the first accommodation portion 11, and the brake ring 30 may be inserted into the second accommodation portion 12 with the pressing protrusions 23 of the clutch gear 20 interposed therebetween.

The cover 50 may be coupled to the upper portion of the housing 10 in the state in which the clutch gear 20, the brake ring 30, and the brake drum 40 are assembled in the housing 10, thereby preventing separation of the clutch gear 20, the brake ring 30, and the brake drum 40 coupled in the housing 10.

Specifically, the cover 50 coupled to the upper portion of the housing 10 may be seated on the brake ring 30, the pressing protrusions 23, and a seating surface 43 formed at an edge of the brake drum 40.

With reference to FIG. 19, clips 51 may be provided on a lateral surface of the cover 50. A coupling hole 511 may be provided in the clip 51. The coupling holes 511 of the clips 51 may be coupled to the coupling protrusions 14 provided on a lateral surface of the housing 10.

As described above, the assembling structure implemented by the clips 51 may not only make it very easy to assemble the cover 50 and the housing 10, but also solve a problem of a deterioration in quality caused by heat generated when the cover 50 and the housing 10 are assembled by an assembling method in the related art, such as welding or caulking.

With reference to FIGS. 19, 20, and 22, gear teeth 211 may be formed along an inner-diameter portion of the clutch gear 20. Only some of the gear teeth 211 of the clutch gear 20 may be exposed through the cut-out portions 13 of the housing 10.

As described above, the clutch gear 20 is mostly positioned in the housing 10, and only some of the gear teeth 211 are exposed, such that the clutch gear 20 may stably rotate in the housing 10.

The two cut-out portions 13 are formed at two opposite sides of the inner-diameter portion of the housing 10, such that the power swivel device may be used in common for a rightward or leftward swivel operating method.

The gear teeth 211 of the clutch gear 20, which are exposed through the cut-out portions 13, may engage with a pinion gear PG of the motor M.

Because the pinion gear PG of the motor M engages with the gear teeth 211 of the clutch gear 20 as described above, the power of the motor M may be transmitted to the clutch gear 20 through the pinion gear PG.

With reference to FIGS. 19 to 21, stoppers 41 may be provided on portions of an inner-diameter portion of the brake drum 40 that correspond to the pinion gear PG of the motor M. The stopper 41 may be configured to surround at least a part of a circumference of the pinion gear PG of the motor M. The stoppers 41 may allow the pinion gear PG to be assembled at an accurate position within an allowable error range.

The stopper 41 may determine a final position of the vehicle seat (not illustrated) by means of a hard stop with the pinion gear PG of the motor M.

For example, two stoppers 41 may be formed at two opposite sides of the inner-diameter portion of the brake drum 40 so that the power swivel device may be used in common for the rightward or leftward swivel operating method.

An unlocked state may be implemented when the pressing protrusions 23 of the clutch gear 20 rotate in the brake release direction toward rollers 82 and push the rollers 82 to the support grooves 421. A locked state (caught or wedged state) (e.g. when rollers 82 are wedged between the inner diameter portion of the brake ring 30 and the support surfaces 42) may be achieved again when the pressing protrusions 23 of the clutch gear 20 reversely rotate to positions at which the pressing protrusions 23 may release rollers 82 of brake members 80 to be caught or wedged between the inner diameter portion of the brake ring 30 and the support surfaces 42. Because the brake module (the brake ring, the brake drum, or the like), which is operated by the motor M, may be stopped at a position at which the operation of the motor M is completed, the rollers 82 disposed in the traveling direction (e.g. the rotating direction of the pressing protrusions 23) may be continuously maintained in an unlocked state. As a result, the brake module is in a state capable of rotating by a stroke amount (about 1 to 2 degrees) of the roller 82 in the traveling direction, and the stroke amount may be recognized as a clearance, although it may be only once.

However, according to the fifth embodiment of the present disclosure, because the stopper 41 of the brake drum 40 is configured to surround the pinion gear PG, the stopper 41 is caught by the pinion gear PG and cannot rotate even though the brake drum 40 is about to additionally rotate in the traveling direction in the state in which the operation of the brake drum 40 is stopped at the hard stop.

Also, because the stopper 41 is positioned on the brake drum 40, it is possible to immediately suppress the rotation of the brake drum 40 in the traveling direction without being influenced by as shapes, dimensions, and so forth of the components of the power swivel device, in comparison with a case in which the stopper 41 is provided at another position on another component other than the brake drum 40.

Furthermore, in a case in which the stopper 41 is provided at a position other than the brake drum 40, there is a very high likelihood that a deviation of an absolute position (0 degrees) may occur due to various factors. However, because the stopper 41 is provided on the inner diameter portion of the brake drum 40 according to the fifth embodiment of the present disclosure, such a problem may be completely solved.

With reference to FIG. 23, coupling members 70, such as serration bolts, may be coupled to the brake drum 40. The coupling member 70 may be coupled to the brake drum 40 and/or the clutch gear 20 by a method such as press-fitting, bolting, or welding.

With reference to FIG. 21, the brake members 80 may be positioned between the pressing protrusions 23 while being positioned between an inner-diameter portion of the brake ring 30 and an outer-diameter portion of the brake drum 40.

The brake member 80 may include an elastic member 81, and the rollers 82 provided at two opposite sides of the elastic member 81. The rollers 82 may be elastically supported by the elastic member 81 so as to be directed toward the pressing protrusions 23.

The elastic member 81 is most preferably configured as a spring. However, the elastic member 81 may be made of rubber or elastomer that provides an elastic force.

Support surfaces 42 may be provided along the outer-diameter portion of the brake drum 40. The support surface 42 may be configured as an inclined surface. The support surfaces 42 may be configured to correspond to the rollers 82 of the brake members 80 so as to support the rollers 82 of the brake members 80.

In a case that the rollers 82 are positioned on the support surfaces 42 by the elastic force of the elastic members 81, the rollers 82 may be fitted or caught in the form of wedges between the inner-diameter portion of the brake ring 30 and the support surfaces 42. As a result, a brake state (e.g. the locked state) may be implemented in which the vehicle seat (not illustrated) cannot rotate.

A release state (e.g. the unlocked state) may be implemented when the rollers 82 are pushed by the pressing protrusions 23 and positioned in support grooves 421 each provided at one end of each of the support surfaces 42 when the clutch gear 20 rotates. As a result, a brake release state (e.g. the unlocked state) may be implemented in which the vehicle seat (not illustrated) may rotate.

The support groove 421 may have a circular arc shape that conforms to the roller 82. A width between the inner-diameter portion of the brake ring 30 and the support surface 42 may decrease from one end of the support surface 42 toward the other end of the support surface 42 directed toward the pressing protrusion 23.

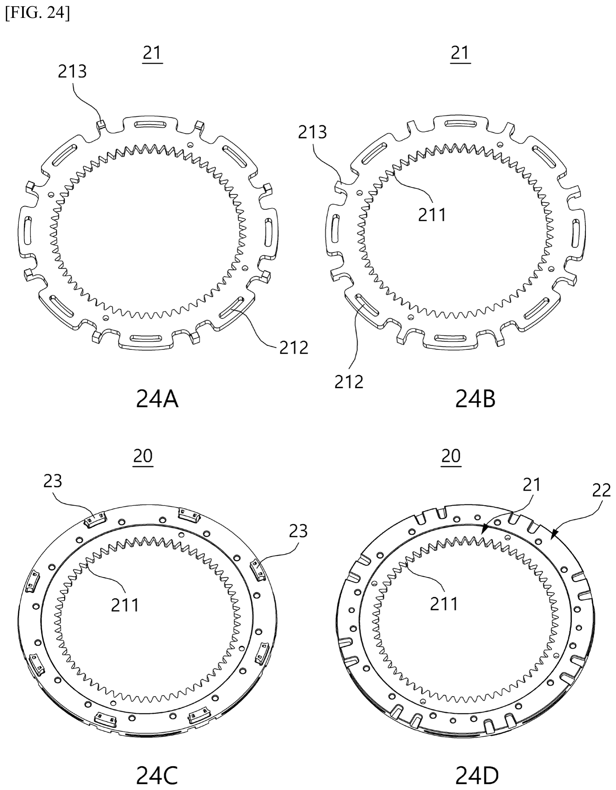

FIGS. 24A to 24D views illustrating the clutch gear manufactured as a double injection molding structure according to the fifth embodiment of the present disclosure.

As illustrated in FIGS. 24A to 24D, the clutch gear 20 may be configured as a double injection molding structure including a gear part 21 and a main body part 22.

FIG. 24A is a top plan view of the gear part, and FIG. 24B is a bottom plan view of the gear part. The gear part 21 may be made of metal such as steel. Slot holes 212 and bending portions 213 may be provided along an outer-diameter portion of the gear part 21.

The injection molding may be performed as a forming material of the main body part 22 is introduced into the slot holes 212, such that the double injection molding may be securely performed on the gear part 21 and the main body part 22.

The double injection molding may be performed on the gear part 21 and the main body part 22 in a state in which the bending portions 213 are bent to be directed toward a center of the gear part 21. The pressing protrusions 23 may be naturally formed during the process in which the injection molding is performed so that the main body part 22 surrounds the bending portions 213 of the gear part 21.

FIG. 24C is a top plan view illustrating the clutch gear formed by performing the double injection molding on the gear part and the main body part, and FIG. 24D is a bottom plan view illustrating the clutch gear formed by performing the double injection molding on the gear part and the main body part. Because the clutch gear 20 is manufactured by performing the double injection molding on the gear part 21 and the main body part 22, the clutch gear 20 may be precisely manufactured.

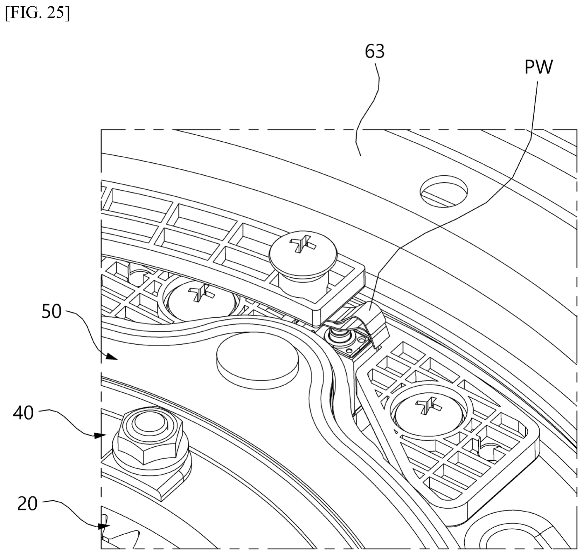

FIG. 25 is a view illustrating a position switch according to the fifth embodiment of the present disclosure.

As illustrated in FIG. 25, a position switch PW configured to detect an error of the clutch gear 20 may be provided.

In a case in which the operation of the power swivel device is stopped by a hard stop of the clutch gear 20 (e.g. when the stopper 41 stops the pinion gear PG by a hard stop), the position switch PW may determine whether a stop position of the clutch gear 20 is a normal position (0 degrees or 180 degrees) or an abnormal position. In a case in which an abnormal load is being applied to the clutch gear 20, the clutch gear 20 may be stopped at the abnormal position.

In a case in which the clutch gear 20 is stopped when the position switch PW is in a turn-on state, the position switch PW may detect the abnormal position. In a case in which the clutch gear 20 is stopped in a section in which the position switch PW is turned off, the position switch PW may recognize that the clutch gear 20 normally reaches a target position.

In another example, the position switch PW may directly detect a preset angle of 0 degrees of the clutch gear 20, thereby preventing an erroneous operation of the clutch gear 20.

For example, any position switch, such as a microswitch or a limit switch, which may perform zero point control, may be used as the position switch PW.

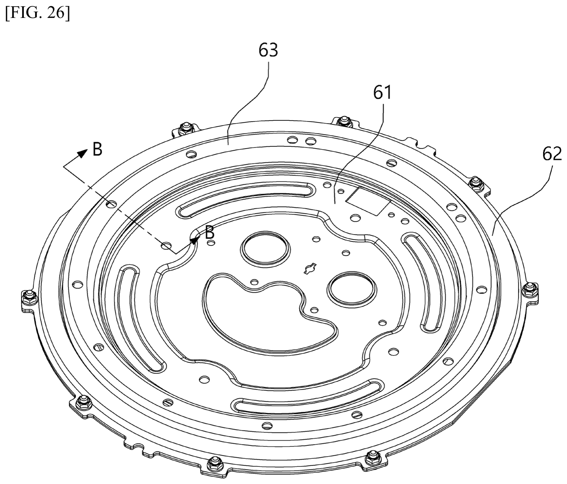

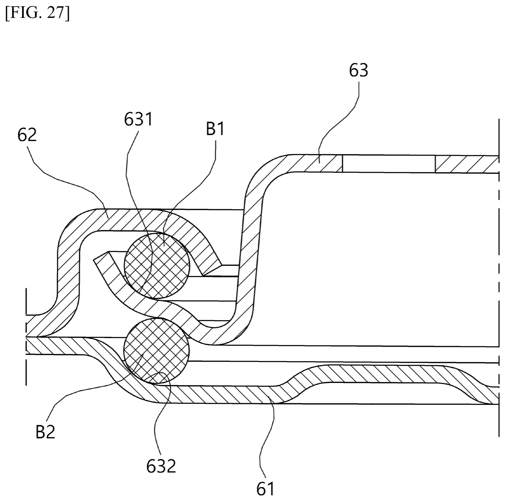

FIG. 26 is a perspective view illustrating a state in which a rim cover and a swivel member are assembled to a fixing frame according to the fifth embodiment of the present disclosure. FIG. 27 is a cross-sectional view taken along line B-B in FIG. 26.

As illustrated in FIGS. 18, 26, and 27, the housing 10 may be seated and coupled onto a fixing frame 61. A rim cover 62 may be coupled to an edge of the fixing frame 61. A swivel member 63 may be inserted into an inner-diameter portion of the rim cover 62. An edge portion of the swivel member 63 may be assembled to be inserted into the rim cover 62.

A first rail part 631 and a second rail part 632 may be respectively provided above and below an edge of the swivel member 63. The first rail part 631 may be rotatably supported by first balls B1 provided in the rim cover 62. The second rail part 632 may be rotatably supported by second balls B2 provided in the fixing frame 61.

The swivel member 63 may be connected to the rotary plate 64. The swivel member 63 may rotate together with the rotary plate 64.

Next, a swivel operation of the fifth embodiment of the present disclosure will be described.

As illustrated in FIGS. 18 and 19, because the pinion gear PG of the motor M and the gear teeth 211 of the clutch gear 20 engage with one another, the power of the motor M may be transmitted to the clutch gear 20 when the motor M operates, such that the clutch gear 20 may rotate in a brake release direction.

As illustrated in FIG. 21, when the clutch gear 20 rotates in the brake release direction, the rollers 82 of the brake members 80, which are wedged or caught between the inner-diameter portion of the brake ring 30 and the support surfaces 42, may be pushed by the pressing protrusions 23 and moved to the support grooves 421.

The wedged or caught state of the rollers 82 may be released as the rollers 82 are pushed by the pressing protrusions 23 and positioned in the support grooves 421. As a result, the brake release state may be implemented in which the vehicle seat (not illustrated) may rotate.

In the brake release state, the rotational force of the clutch gear 20 may be transmitted to the rotary plate 64 connected to the clutch gear 20 by the coupling members 70, such that the rotary plate 64 may rotate.

When the rotary plate 64 rotates, the vehicle seat (not illustrated) connected to the rotary plate 64 may rotate.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

111: Support frame
111a: Seating portion
111b: First protruding portion
111c: Insertion hole
112: Support member
112a: Support portion
112b: Second protruding portion
113: Locking pin
113a: Catching projection
114: First spring
115: Hinge shaft
116: Wire
123: Locking pin
124: Second spring
126: Wire
127: Pulling member
133: Locking pin
138: Unlocking member
138a: Lever
138b: Third locking groove
148: Rotary member
148a: Rotary lever
149: Lift member
149a: Pressing pin
A: Actuator
10: Housing
11: First accommodation portion
12: Second accommodation portion
13: Cut-out portion
14: Coupling protrusion
15: First through-hole
20: Clutch gear
21: Gear part
211: Gear tooth
212: Slot hole
213: Bending portion
22: Main body part
23: Pressing protrusion
231: Insertion protrusion
24: Second through-hole
30: Brake ring
40: Brake drum
41: Stopper
42: Support surface
421: Support groove
43: Seating surface
44: Locking groove
45: First locking groove
50: Cover
51: Clip
511: Coupling hole
61: Fixing frame
62: Rim cover
63: Swivel member
631: First rail part
632: Second rail part
64: Rotary plate
641: Second locking groove
642: Rotation restriction protrusion
643: Supporting member
70: Coupling member
80: Brake member
81: Elastic member
82: Roller
B1: First ball
B2: Second ball
M: Motor
PG: Pinion gear
PW: Position switch

## Claims

1. A power swivel device for a vehicle seat, the power swivel device comprising:
a manual operation device configured to allow manual rotation of a vehicle seat connected to a rotary plate by releasing a clutch gear and a brake drum of the power swivel device from a first restrained state or by releasing the brake drum and the rotary plate from a second restrained state when a motor of the power swivel device is stopped.

2. The power swivel device of claim 1,
wherein the manual operation device comprises:
a locking pin having a lower portion configured to penetrate the rotary plate and to be inserted into a locking groove positioned on the brake drum;
a support frame spaced apart from the rotary plate at an interval and positioned above the rotary plate, the support frame having an upper surface having an insertion hole into which an upper portion of the locking pin is inserted, the support frame having a seating portion extending from an outer-diameter portion of the support frame, the seating portion being connected to the rotary plate, the support frame being elastically supported by a first spring coupled to the locking pin; and
a support member positioned between the support frame and the rotary plate and having a support portion extending from an outer-diameter portion of the support member, the support portion being configured to support the locking pin.

3. The power swivel device of claim 2, wherein a catching projection is positioned on an outer-diameter portion of the locking pin, and the first spring is positioned between the catching projection and the support frame in a state in which the first spring is caught by the catching projection,
wherein a first protruding portion positioned on an inner-diameter portion of the support frame and a second protruding portion positioned on the outer-diameter portion of the support member are connected by a hinge shaft, and
wherein the support portion supports the catching projection while surrounding the outer-diameter portion of the locking pin,
wherein, optionally, when a wire connected to the support member is pulled in an unlocking direction, the second protruding portion is configured to rotate downward about the hinge shaft, the support portion is configured to push the catching projection upward, a lower portion of the locking pin is configured to depart from the locking groove of the brake drum and a penetrated portion of the rotary plate when the support portion pushes the catching projection upward, and the brake drum and the rotary plate are configured to be released from the second restrained state, such that the vehicle seat connected to the rotary plate is rotatable manually.

4. The power swivel device of claim 1,
wherein an inner-diameter portion of the brake drum has a first locking groove positioned thereon, and an inner-diameter portion of the rotary plate has a second locking groove positioned thereon,
wherein the manual operation device comprises:
a locking pin configured to be simultaneously inserted into the first locking groove positioned on the inner-diameter portion of the brake drum and the second locking groove positioned on the inner-diameter portion of the rotary plate; and
a spring having one end connected to the locking pin and another end connected to the rotary plate.

5. The power swivel device of claim 4,
wherein the manual operation device further includes a pulling member configured to be disposed in the first locking groove and the second locking groove,
wherein when a wire connected to the pulling member is pulled in an unlocking direction, the locking pin inserted into the first locking groove and the second locking groove is configured to be pushed in the unlocking direction by the pulling member, the locking pin and the pulling member are configured to depart from the first locking groove and the second locking groove, and the brake drum and the rotary plate are configured to be released from the second restrained state, such that the vehicle seat connected to the rotary plate is rotatable manually.

6. The power swivel device of claim 1,
wherein an inner-diameter portion of the brake drum has a first locking groove positioned thereon, and an inner-diameter portion of the rotary plate has a second locking groove positioned thereon,
wherein the manual operation device for a vehicle seat comprises:
a locking pin configured to be simultaneously inserted into the first locking groove positioned on the inner-diameter portion of the brake drum and the second locking groove positioned on the inner-diameter portion of the rotary plate; and
an unlocking member positioned above the rotary plate, having an inner-diameter portion having a third locking groove configured to be inserted with the locking pin, and having an outer-diameter portion from which a lever extends,
wherein, optionally, when the lever is rotated in an unlocking direction, the locking pin inserted into the third locking groove is configured to be pushed in a first direction by the inner-diameter portion of the unlocking member by the rotation of the unlocking member, the locking pin is configured to depart from the first locking groove, the second locking groove, and the third locking groove, and the brake drum and the rotary plate are configured to be released from the second restrained state, such that the vehicle seat connected to the rotary plate is rotatable manually.

7. The power swivel device of anyone of claims 1-6,
wherein the manual operation device for a vehicle seat comprises:
a lift member positioned below a housing and having a pressing pin configured to push a pressing protrusion upward in an unlocking direction to separate the pressing protrusion from the clutch gear, the pressing protrusion being coupled to the clutch gear accommodated in the housing; and
an actuator configured to push the lift member upward.

8. The power swivel device of claim 7,
wherein when the lift member is pushed upward in the unlocking direction by the actuator, the pressing pin is configured to penetrate a first through-hole of the housing and a second through-hole of the clutch gear and push an insertion protrusion upward in the unlocking direction, the insertion protrusion being positioned on a lower portion of the pressing protrusion and configured to be inserted into the second through-hole, the pressing protrusion is configured to be separated from the clutch gear, and the clutch gear and the brake drum are configured to be released from the first restrained state, and
wherein the rotary plate is connected to the brake drum, and when the clutch gear and the brake drum are released form the first restrained state, the brake drum and the rotary plate are configured to be integrally rotated when a rotary lever positioned on a rotary member connected to the brake drum rotates, such that the vehicle seat connected to the rotary plate is rotatable manually.

9. The power swivel device of anyone of claims 1-8, further comprising:
a housing having an inner-diameter portion having at least one cut-out portion; and
a brake module inserted into the housing and comprising the brake drum,
wherein the clutch gear has gear teeth positioned along an inner-diameter portion thereof, at least one portion of the gear teeth being exposed through the at least one cut-out portion, the gear teeth being configured to engage with a pinion gear of the motor in a state in which the clutch gear is inserted into the housing,
wherein at least one stopper is positioned on the brake drum, and
wherein the at least one stopper is configured to restrict an additional rotation of the brake drum in a hard stop state in which an operation of the brake drum is stopped.

10. The power swivel device of claim 9, wherein the housing comprises:
a first accommodation portion positioned in the housing adjacent to the inner-diameter portion of the housing and having the clutch gear inserted therein; and
a second accommodation portion configured to communicate with the first accommodation portion and positioned in the housing adjacent to an outer edge of the housing while defining a stepped portion together with the first accommodation portion, the second accommodation portion having a height higher than a height of the first accommodation portion,
wherein the brake module further comprises a brake ring inserted into the second accommodation portion, and
wherein the brake drum is seated on the clutch gear and positioned at a height same as a height of the brake ring.

11. The power swivel device of claim 9 or 10, wherein the at least one stopper is positioned on an inner-diameter portion of the brake drum to correspond to a position of the pinion gear, and the at least one stopper is configured to surround at least a part of a circumference of the pinion gear.

12. The power swivel device of anyone of claims 9-11, wherein the clutch gear has a double injection molding structure comprising a gear part and a main body part configured to surround an edge portion of the gear part.

13. The power swivel device of anyone of claims 9-12, further comprising:
a position switch configured to prevent an erroneous operation of the clutch gear, wherein the position switch is configured to determine that a position of the clutch gear is an abnormal position when the clutch gear is stopped when the position switch is in a turn-on state, or determine that the position of the clutch gear is a normal position when the clutch gear is stopped while the position switch is turned off.

14. The power swivel device of claim 10, or of anyone of claims 11-13 provided that in combination with claim 10, wherein a brake member is positioned between an inner-diameter portion of the brake ring and an outer-diameter portion of the brake drum,
wherein the brake member is configured to be in a brake state when the brake member is positioned between pressing protrusions disposed along an edge of one surface of the clutch gear, and
wherein the brake member is configured to switch from the brake state to a brake release state by being pushed by the pressing protrusions when the clutch gear rotates,
wherein, optionally, the brake member comprises:
an elastic member; and
rollers disposed at two opposite sides of the elastic member to be directed toward the pressing protrusions, the rollers being elastically supported by the elastic member,
wherein, optionally, the brake drum has support surfaces positioned on the outer-diameter portion thereof,
wherein, optionally, each of the rollers is configured to be wedged between an inner-diameter portion of the brake drum and each of the support surfaces to implement the brake state, and
wherein, optionally, each of the rollers is configured to be released from being wedged to implement the brake release state when each of the rollers is pushed by each of the pressing protrusions and positioned in a support groove positioned at one end of each of the support surfaces.

15. The power swivel device of claim 10, or of anyone of claims 11-14 provided that in combination with claim 10, wherein a cover is coupled to an upper surface of the housing above the clutch gear, the brake ring, and the brake drum, and
wherein the cover is seated on an upper surface of the brake ring, pressing protrusions of the clutch gear, and a seating surface positioned at an edge of the brake drum,
wherein, optionally, a clip is disposed on an outer-diameter portion of the cover, and a coupling hole defined in the clip is coupled to a coupling protrusion disposed on an outer-diameter portion of the housing, and/or
wherein, optionally, the housing is seated and coupled onto a fixing frame, a rim cover is coupled to an edge of the fixing frame, a swivel member is inserted into an inner-diameter portion of the rim cover, an edge portion of the swivel member is inserted into the rim cover, a first rail part and a second rail part are respectively positioned above and below the edge portion of the swivel member, the first rail part is rotatably supported by a first ball disposed under the rim cover and above the edge portion of the swivel member, the second rail part is rotatably supported by a second ball positioned on the fixing frame and under the edge portion of the swivel member, and the swivel member is connected to the rotary plate.
